# EUROPEAN PATENT SPECIFICATION

(11) **EP 2 203 321 B1**
(45) Date of publication and mention of the grant of the patent: **17.02.2016**
(21) Application number: 08788416.9
(22) Date of filing: 22.08.2008
(51) Int. Cl.: B60F 3/00, B63C 13/00

(54) **AMPHIBIAN**
AMPHIBIENFAHRZEUG
ENGIN AMPHIBIE

(30) Priority: 24.08.2007 GB 0716581
(43) Date of publication of application: 07.07.2010
(60) Divisional application: 13189426.3
(73) Proprietor: Gibbs Technologies Ltd., Warwickshire CV11 4LY (GB)
(72) Inventor: GIBBS, Alan, Timothy, London SW11 4PL (GB)
(74) Representative: Boult Wade Tennant
(86) International application number: PCT/GB2008/002856
(87) International publication number: WO 2009/027646

(56) References cited:
- WO-A-2008/023191
- GB-A- 1 587 183
- US-A- 3 370 309
- US-A- 4 601 481
- US-A- 5 769 021
- US-A1- 2005 034 646
- US-B2- 7 004 801

## Description

The present invention relates to an amphibian, and in particular, to an amphibian with retractable wheels.

A number of suspension layouts for amphibians have been proposed. Such suspension layouts allow sprung and damped movement of the wheels when the amphibian is on land, and retraction of the wheels for use of the vehicle on water. The suspension is generally inboard of the wheel, for example as known from US 2005/0034646 to Royle. This has the disadvantage that the width of the hull between the wheels is restricted for a given width of the amphibian, as at least a lower suspension arm must project through the plane of the hull to support the wheel in protracted land mode. Space must also be allowed for suspension rebound travel. An example of this restriction may be seen from the Applicant's co-pending application published as US 2007/0,006,788 A1.

Document US5769021 A discloses an amphibious craft having at least two independent, selectively useful, surface engaging supports, each available individually as a load bearer depending upon the support surface encountered. Each bearer has a primary surface engaging hull portion having a defined waterline. The primary surface engaging bearer is coextensive with the waterline and further defines a continuous, uninterrupted contour. The primary surface engaging bearer ensures minimal friction or drag when selected. A secondary surface engaging means bearer is operable independently of the primary surface engaging means comprising at least two wheel sets each having a first position above the waterline and a second position below the waterline. This document does not disclose a power source for driving the one or more wheels via a transmission.

US7004801 B2 discloses an amphibious vehicle having a self propelled and steerable retractable undercarriage system, enabling the vehicle to enter and exit the water under its own power. The swing of the wheels and their supporting struts occurs external to the hull of the vehicle. A steerable nose leg is raised or lowered by an actuator situated inside the boat. This document does not disclose suspension arms on each side of a pair of wheels so that the pair of wheels lie between the arms.

The present invention provides an amphibian according to claim 1. Thus, the width of the hull is not restricted by the suspension.

Embodiments of the present invention will now be described, by way of example only, with reference to the accompanying drawings in which:
Figure 1 is a underneath plan view of the amphibian of the present invention;
Figure 2 is a rear perspective view of the amphibian of Figure 1;
Figure 3 is a plan view of a further embodiment of the present invention; and
Figure 4 a rear perspective view of a further embodiment of the present invention.

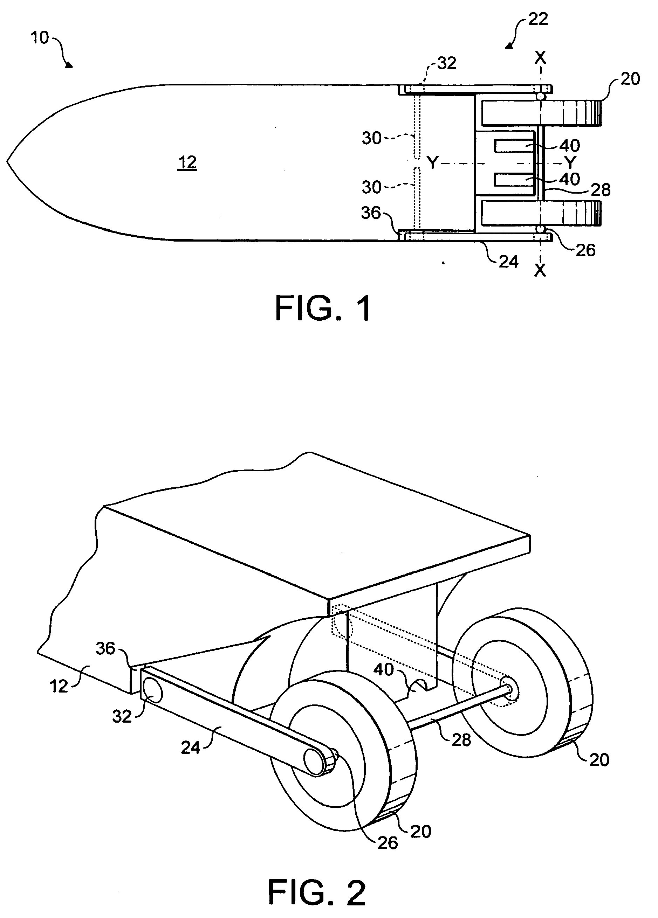

Referring to the drawings, Figures 1 and 2 show an amphibian 10 according to the present invention. The amphibian 10 comprises a hull 12 being a buoyant vessel, and having a pair of rear wheels 20. The hull 12 is V-shaped in vertical cross-section. The amphibian 10 also has one or more front wheels (not shown).

The vehicle 10 includes a motor (not shown) or a similar power source to provide power_through a transmission to the rear wheels 20. Alternatively, the motor may power the front wheels only, or may power the front wheels and rear wheels.

The rear wheels 20 are connected to the hull 12 by a suspension assembly 22. The suspension assembly 22 comprises a pair of trailing arms 24, extending rearwardly from the hull 12. The trailing arms are rotatably connected to a chassis of the vehicle (within and supporting the hull 12) at pivots 32.

The rear wheels 20 are rotatably mounted to inboard sides of the trailing arms 24, each wheel rotating about its own axis. The wheels 20 are rotatably mounted to distal ends of the arms 24, distal to the pivots 32, by mounts 26. The mounts 26 allow rotation of the wheels 20 about their common rotational axis X-X. The mounts 26 are compliantly secured on trailing arms 24 and allow relative movement between the wheels 20 and arms 24 about a substantially horizontal axis, parallel to a longitudinal axis Y-Y of the hull, in order to allow the hull 12 to roll in use on land, but to maintain good tyre contact with the ground. Although tyres of a substantially square tread cross-section are shown in the figures, tyres of a more rounded cross-section as used on motorcycles, may be used instead. The mounts 26 may each comprise a ball joint.

The two rear wheels 20 are preferably connected by an axle 28. The axle 28 assists in keeping the wheels 20 parallel. Alternatively, the pair of wheels may not be connected by an axle.

Each trailing arm 24 is spring-mounted to the vehicle, preferably by torsion bars 30 provided at or adjacent to the pivots 32. A separate torsion bar 30 is preferably provided for each arm 24. The torsion bars extend laterally towards the centre of the hull 12. Separate shock absorbers (not shown) may be provided, to damp out suspension movements.

The wheels 20 may be driven via a shaft acting through a differential (not shown) in the axle 28. The differential may be in the centre of the axle 28, or may be offset to one side.

Alternatively, the wheels 20 may each be driven by a belt or a chain. The belt or chain may be located partially or wholly inside one or each arm 24. Alternatively, a driven toothed wheel or sprocket may be provided at the centre of axle 28.

The amphibian 10 may be powered on water by one or more jet drives 40. The or each jet drive has one or more jet nozzles through which water is expelled to provide propulsion. The jet nozzles may be located between the wheels 20. The jets function as marine drives, which are separate to the wheels, which function as land drives. The marine drive or drives are fixed in position on the amphibian; as opposed to the land drives, which may be raised or lowered. The land drives may be used to provide low speed propulsion on water, but are not suitable for planing. This is firstly because they cannot transmit enough power to get the amphibian onto the plane and keep it there; and secondly, because of the hydrodynamic drag caused by the lowered wheels being located below the amphibian's waterline.

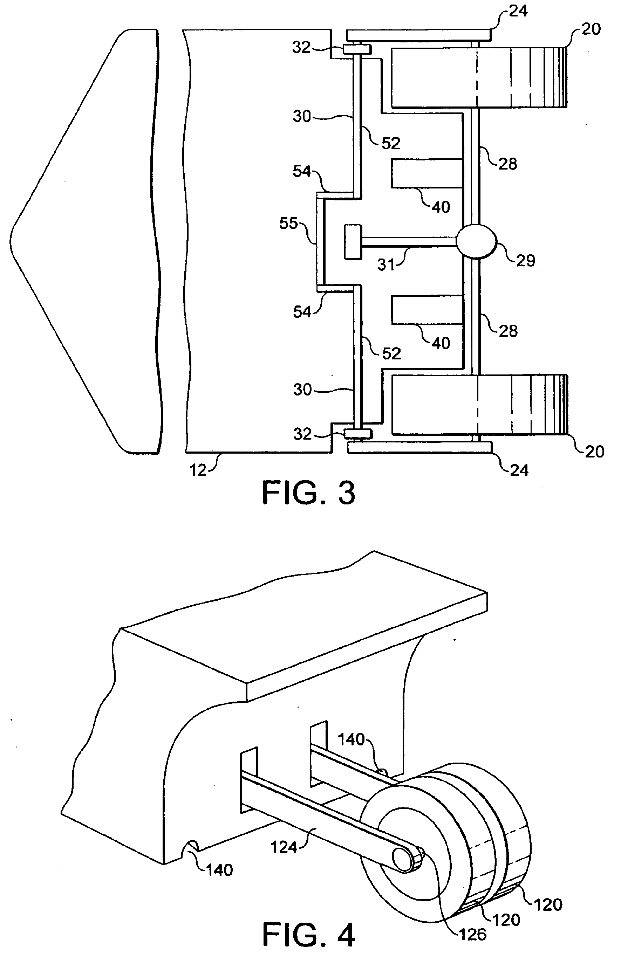

The suspension 22 is provided with a retraction mechanism, in order to retract the wheels 20 for use of the amphibian 10 on water. It is preferred to retract the wheels above the waterline, to enable the amphibian to plane. The retraction mechanism may comprise cranked torsion bars, as shown in Figure 3. Each torsion bar 30 comprises an aligned portion 52 substantially aligned with the pivots 32, and defining a rotational axis of the torsion bar 30. Each torsion bar 30 further comprises a cranked portion 54 perpendicular to the axis of the torsion bar. The cranked portion 54 is at or near an inboard end of each torsion bar 30.

An actuator may be attached to each cranked portion 54. Contraction or extension of the actuators can be used to control retraction or deployment of the wheels 20. Alternatively, a single actuator may be connected to a cranked portion of the torsion bars 30 of both of the pair of wheels 20 (the single actuator could act on a bar 55 connecting the cranked portions 54 and shown in Figure 3).

Alternatively, the retraction mechanism may be in the form of one or more hydraulic struts (not shown). The hydraulic struts may be connected between the arms 24 or axle 28 and the hull 12. The hydraulic struts may act both as dampers and also as hydraulic actuators to retract and deploy the wheels. Suitable hydraulic struts are known from publication US 2003/0047899.

The hull 12 has recesses 36 on either side, for receiving the arms 24. The recesses 36 allow the outboard sides of the arms 24 to be flush with outboard sides of the hull 12. The recesses are shaped to allow retraction of the wheels.

In a retracted position, the wheels 20 may be within the length of the hull 12. The hull 12 extends over and beyond the wheels 20 in their retracted position. This location of the wheels improves spray control when the amphibian is planing on water, and the wheels are in the retracted position.

With reference to Figure 4, a pair of rear wheels 120 may be located in close proximity to each other, i.e. adjacent to each other. The closely spaced pair of wheels would be located on the central longitudinal axis of the amphibian. The closely spaced pair of wheels may effectively form a single wheel.

The pair of wheels 120 are supported on trailing arms 124 by mounts 126, substantially as described above. The trailing arms 124 are rotatably attached within the hull, and retractable using cranked torsion bars extending outwardly from the arms 124 within the hull, analogously to the cranked torsion bars described above. Preferably, each arm is connected to its own laterally outwardly extending bar, each outwardly extending bar having a cranked portion, the two cranked portions connected by a connecting strut extending laterally.

A short axle (not shown) preferably connects the wheels 120 together. A pair of jet drives 140 are located outboard of the wheels 120 (i.e. laterally offset from the wheels) for propelling the amphibian on water.

The above description relates to the use of the suspension assembly 22 on rear wheels of an amphibian. Alternatively, the same or similar suspension assembly 22 may be used for the front wheels of an amphibian. The arms 24 may extend rearwardly and support front wheels as described above. Alternatively, the arms 24 may extend forwardly, such that the supported front wheels are forward of the pivots 36. The rear wheels 20 may be supported on forwardly extending arms. The features described above would be the same or reversed as would be clear to a person skilled in the art.

The amphibian may have a total of three wheels, in the form of a pair of front wheels and a single rear wheel, or a pair of rear wheels and a single front wheel. The amphibian may have four wheels, being a front pair of wheels and a rear pair of wheels. One or both of the front and rear pair of wheels may have a suspension assembly as described. The amphibian may have more than four wheels, for example, the amphibian may have six wheels. A central pair of wheels may be located between front and rear pairs of wheels. The central pair of wheels are preferably retractable, and may or may not be driven. The additional central pair of wheels would reduce ground pressure exerted by the amphibian, and would also reduce breakover angle, for greater capability in traversing rough ground, as described in the Applicant's co-pending application GB0619244.7.

## Claims

1. A planing amphibian (10) for use on land and water comprising:
a hull (12);
a suspension assembly (22), the suspension assembly (22) being both sprung and damped;
a pair of wheels (20) mounted to the amphibian by the suspension assembly (22);
a power source;
at least one land drive for use of the amphibian on land, the at least one land drive comprising one or more driven wheels, with power to drive the one or more wheels provided by the power source via a transmission;
at least one marine drive (40) for use of the amphibian on water; and
a wheel retraction mechanism for moving the pair of wheels (20) between a deployed wheel position for use of the amphibian on land and a retracted wheel position for planing of the amphibian on water, wherein the pair of wheels (20) are retractable to a position above a waterline of the amphibian for use of the amphibian on water; and
wherein the suspension assembly (22) comprises suspension arms (24) each side of the pair of wheels (20) so that the pair of wheels (20) lie between the arms (24).

2. A planing amphibian according to claim 1, where the at least one marine drive (40) is fixed in position on the amphibian.

3. A planing amphibian according to claim 1, where only two wheels (20) are mounted to the amphibian by the suspension arms (24).

4. A planing amphibian according to claim 1, where all wheels are mounted on retractable suspensions.

5. A planing amphibian as claimed in claim 1 wherein the suspension arms (24) are spaced apart by a distance less than a maximum width of the hull (12).

6. A planing amphibian as claimed in one of the preceding claims wherein the suspension arms (24) are trailing arms rotatably connected to the amphibian, each trailing arm (24) connected to the outboard side of a respective wheel.

7. A planing amphibian as claimed in claim 6 wherein each wheel (20) is mounted on the respective trailing arm by a compliant mount which allows relative movement between the wheel and the arm.

8. A planing amphibian as claimed in claim 7 wherein each mount comprises a ball joint.

9. A planing amphibian as claimed in any one of the preceding claims wherein the pair of wheels (20) are a pair of rear wheels.

10. A planing amphibian as claimed in any one of the preceding claims wherein an axle (28) connects the pair of wheels (20).

11. planing amphibian as claimed in claim 10 comprising a motor connected to drive the wheels via a differential separating two parts of the axle (28).

12. A planing amphibian as claimed in any one of claims 1 to 10 comprising a motor connected to a belt or chain drive, the belt or chain drive configured to drive the wheels.

13. A planing amphibian as claimed in claim 12 wherein the belt or chain drive is partially or wholly inside one or each suspension arm.

## Patentansprüche

1. Gleitamphibienfahrzeug (10) zur Verwendung auf Land und Wasser, welches aufweist:
einen Rumpf (12);
eine Aufhängungsanordnung (22), wobei die Aufhängungsanordnung (22) sowohl gefedert als auch gedämpft ist;
ein Räderpaar (20), das durch die Aufhängungsanordnung (22) an dem Amphibienfahrzeug angebracht ist;
eine Antriebsquelle;
zumindest einen Landantrieb zur Verwendung des Amphibienfahrzeugs auf dem Land, wobei der zumindest eine Landantrieb ein oder mehrere angetriebene Räder aufweist, mit Kraft zum Antrieb des einen oder der mehreren Räder, die über ein Getriebe von der Antriebsquelle geliefert wird;
zumindest einen Schiffsantrieb (40) zur Verwendung des Amphibienfahrzeugs auf dem Wasser; und
einen Radeinziehmechanismus zum Bewegen des Räderpaars (20) zwischen einer ausgefahrenen Radstellung zur Verwendung des Amphibienfahrzeugs auf dem Land und einer eingefahrenen Radstellung zum Gleiten des Amphibienfahrzeugs auf dem Wasser, wobei, zur Verwendung des Amphibienfahrzeugs auf dem Wasser, das Räderpaar (20) zu einer Position über einer Wasserlinie des Amphibienfahrzeugs einziehbar ist; und
wobei die Aufhängungsanordnung (22) Aufhängungsarme (24) jederseits des Räderpaars (20) aufweist, so dass das Räderpaar (20) zwischen den Armen (24) liegt.

2. Gleitamphibienfahrzeug nach Anspruch 1, wobei der zumindest eine Schiffsantrieb (40) an dem Amphibienfahrzeug fest positioniert ist.

3. Gleitamphibienfahrzeug nach Anspruch 1, wobei nur zwei Räder (20) durch die Aufhängungsarme (24) an dem Amphibienfahrzeug angebracht sind.

4. Gleitamphibienfahrzeug nach Anspruch 1, wobei alle Räder an einziehbaren Aufhängungen angebracht sind.

5. Gleitamphibienfahrzeug nach Anspruch 1, wobei die Aufhängungsarme (24) mit einem Abstand voneinander angeordnet sind, der kleiner als eine maximale Breite des Rumpfs (12) ist.

6. Gleitamphibienfahrzeug nach einem der vorhergehenden Ansprüche, wobei die Aufhängungsarme (24) Längslenker sind, die mit dem Amphibienfahrzeug drehbar verbunden sind, wobei jeder Längslenker (24) mit der Außenbordseite eines jeweiligen Rads verbunden ist.

7. Gleitamphibienfahrzeug nach Anspruch 6, wobei jedes Rad (20) an dem jeweiligen Längslenker ein nachgiebiges Lager angebracht ist, das eine Relativbewegung zwischen dem Rad und dem Lenker erlaubt.

8. Gleitamphibienfahrzeug nach Anspruch 7, wobei jedes Lager ein Kugelgelenk aufweist.

9. Gleitamphibienfahrzeug nach einem der vorhergehenden Ansprüche, wobei das Räderpaar (20) ein Paar von Hinterrädern ist.

10. Gleitamphibienfahrzeug nach einem der vorhergehenden Ansprüche, wobei eine Achse (28) das Räderpaar (20) verbindet.

11. Gleitamphibienfahrzeug nach Anspruch 10, das einen Motor aufweist, der mit einem Antrieb der Räder über ein Differential verbunden ist, das zwei Teile der Achse (28) trennt.

12. Gleitamphibienfahrzeug nach einem der Ansprüche 1 bis 10, das einen Motor aufweist, der mit einem Riemen- oder Kettenantrieb verbunden ist, wobei der Riemen- oder Kettenantrieb zum Antrieb der Räder konfiguriert ist.

13. Gleitamphibienfahrzeug nach Anspruch 12, wobei sich der Riemen- oder Kettenantrieb teilweise oder insgesamt in einem oder jedem Führungsarm befindet.

## Revendications

1. Engin amphibie de type planant (10) pour une utilisation sur terre et dans l'eau comprenant :
une coque (12) ;
un ensemble de suspension (22), l'ensemble de suspension (22) étant à la fois suspendu et amorti ;
une paire de roues (20) montées sur l'engin amphibie par l'ensemble de suspension (22) ;
une source de puissance ;
au moins une propulsion à usage terrestre pour l'utilisation de l'engin amphibie sur terre, l'au moins une propulsion à usage terrestre comprenant une ou plusieurs roue(s) entraînée(s), avec une puissance pour entraîner la ou les plusieurs roue(s) fournie par la source de puissance par l'intermédiaire d'une transmission ;
au moins une propulsion marine (40) pour l'utilisation de l'engin amphibie dans l'eau ; et
un mécanisme de rétraction de roues destiné à déplacer la paire de roues (20) entre une position de roues déployées pour l'utilisation de l'engin amphibie sur terre et une position de roues rétractées pour l'hydroplanage de l'engin amphibie, où la paire de roues (20) sont rétractables à une position au-dessus d'une ligne de flottaison de l'engin amphibie pour l'utilisation de l'engin amphibie dans l'eau ; et
dans lequel l'ensemble de suspension (22) comprend des bras de suspension (24) de chaque côté de la paire de roues (20) de sorte que la paire de roues (20) soient situées entre les bras (24).

2. Engin amphibie de type planant selon la revendication 1, dans lequel l'au moins une propulsion marine (40) est fixée en position sur l'engin amphibie.

3. Engin amphibie de type planant selon la revendication 1, dans lequel deux roues (20) seulement sont montées sur l'engin amphibie par les bras de suspension (24).

4. Engin amphibie de type planant selon la revendication 1, dans lequel toutes les roues sont montées sur des suspensions rétractables.

5. Engin amphibie de type planant tel que revendiqué dans la revendication 1, dans lequel les bras de suspension (24) sont espacés d'une distance inférieure à une largeur maximale de la coque (12).

6. Engin amphibie de type planant tel que revendiqué dans l'une quelconque des revendications précédentes, dans lequel les bras de suspension (24) sont des bras oscillants reliés en rotation à l'engin amphibie, chaque bras oscillant (24) relié au côté extérieur d'une roue respective.

7. Engin amphibie de type planant tel que revendiqué dans la revendication 6, dans lequel chaque roue (20) est montée sur le bras oscillant respectif par une monture souple qui permet un mouvement relatif entre la roue et le bras.

8. Engin amphibie de type planant tel que revendiqué dans la revendication 7, dans lequel chaque monture comprend un joint à rotule.

9. Engin amphibie de type planant tel que revendiqué dans l'une quelconque des revendications précédentes, dans lequel la paire de roues (20) est une paire de roues arrière.

10. Engin amphibie de type planant tel que revendiqué dans l'une quelconque des revendications précédentes, dans lequel un essieu (28) relie la paire de roues (20).

11. Engin amphibie de type planant tel que revendiqué dans la revendication 10, comprenant un moteur relié pour entraîner les roues par l'intermédiaire d'un différentiel séparant deux parties de l'essieu (28).

12. Engin amphibie de type planant tel que revendiqué dans l'une quelconque des revendications 1 à 10, comprenant un moteur relié à un entraînement par courroie ou par chaîne, l'entraînement par courroie ou par chaîne étant configuré pour entraîner les roues.

13. Engin amphibie de type planant tel que revendiqué dans la revendication 12, dans lequel l'entraînement par courroie ou par chaîne est partiellement ou entièrement à l'intérieur d'un ou de chaque bras de suspension.
